(19) **Europäisches Patentamt European Patent Office Office européen des brevets**

(11) **EP 4 260 143 B1**

(12) **EUROPEAN PATENT SPECIFICATION**

(45) Date of publication and mention of the grant of the patent:
**12.02.2025 Bulletin 2025/07**

(21) Application number: **21839367.6**

(22) Date of filing: **10.12.2021**

(51) International Patent Classification (IPC):
*G03H 1/04* (2006.01)     *G03H 1/08* (2006.01)
*G03H 1/16* (2006.01)     *G01N 15/0227* (2024.01)
*G01N 15/1434* (2024.01)     *G06T 7/00* (2017.01)
*G03H 1/00* (2006.01)     *G01N 15/00* (2024.01)
*G01N 15/14* (2024.01)

(52) Cooperative Patent Classification (CPC):
**G03H 1/0443; G01N 15/0227; G01N 15/1434;**
G01N 2015/0011; G01N 2015/0038;
G01N 2015/0053; G01N 2015/0233;
G01N 2015/1454; G01N 2015/1493; G03H 1/0486;
G03H 1/0866; G03H 1/16; G03H 2001/0038;
G03H 2001/005; G03H 2001/0445;     (Cont.)

(86) International application number:
**PCT/EP2021/085317**

(87) International publication number:
**WO 2022/123064 (16.06.2022 Gazette 2022/24)**

(54) **METHOD AND ARRANGEMENT FOR HOLOGRAPHIC NANOPARTICLE TRACKING ANALYSIS (H-NTA) IN A DIGITAL HOLOGRAPHIC MICROSCOPE**

VERFAHREN UND ANORDNUNG ZUR HOLOGRAPHISCHEN NANOPARTIKEL-TRACKING-ANALYSE (H-NTA) IN EINEM DIGITALEN HOLOGRAPHISCHEN MIKROSKOP

PROCÉDÉ ET AGENCEMENT POUR L'ANALYSE DE SUIVI DE NANOPARTICULES HOLOGRAPHIQUES (H-NTA) DANS UN MICROSCOPE HOLOGRAPHIQUE NUMÉRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2020 SE 2051450**

(43) Date of publication of application:
**18.10.2023 Bulletin 2023/42**

(73) Proprietor: **HOLTRA AB**
**413 90 Göteborg (SE)**

(72) Inventors:
• **MIDTVEDT, Daniel**
  **442 91 Romelanda (SE)**
• **OLSÉN, Erik**
  **431 38 Mölndal (SE)**
• **MIDTVEDT, Benjamin**
  **414 54 Göteborg (SE)**
• **EKLUND, Fredrik**
  **414 67 Göteborg (SE)**

(74) Representative: **Kransell & Wennborg KB**
**P.O. Box 2096**
**403 12 Göteborg (SE)**

(56) References cited:
**GB-A- 2 552 195**

• **DOMINGUEZ CABALLERO J A: "Digital holographic imaging of aquatic species, Reconstruction by the Fresnel Approximation", 1 February 2006 (2006-02-01), pages 45 - 52, XP002519770, Retrieved from the Internet <URL:http://dspace.mit.edu/handle/1721.1/3565>**

EP 4 260 143 B1

- **MIDTVEDT DANIEL ET AL: "Size and Refractive Index Determination of Subwavelength Particles and Air Bubbles by Holographic Nanoparticle Tracking Analysis", ANALYTICAL CHEMISTRY, vol. 92, no. 2, 10 December 2019 (2019-12-10), US, pages 1908 - 1915, XP055906994, ISSN: 0003-2700, DOI: 10.1021/acs.analchem.9b04101**
- **GOTO KAZUFUMI ET AL: "Three-dimensional motion detection of a 20-nm gold nanoparticle using twilight-field digital holography with coherence regulation", OPTICS LETTERS, vol. 40, no. 14, 10 July 2015 (2015-07-10), US, pages 3344, XP055907292, ISSN: 0146-9592, DOI: 10.1364/OL.40.003344**

(52) Cooperative Patent Classification (CPC): (Cont.)
G03H 2001/0454; G03H 2001/0458;
G03H 2001/0471; G03H 2210/55; G03H 2210/62;
G03H 2223/12; G03H 2223/13; G03H 2223/17;
G03H 2223/50; G03H 2223/55

**Description**

TECHNICAL FIELD

The invention relates to a device and method for characterization of small particles by microscopy. In particular, the invention is related to Digital Holographic Microscopy (DHM). DHM may for example be used for Nanoparticle Tracking Analysis (NTA) in order to determine particle size and refractive index (RI) of the detected particles.

BACKGROUND ART

Determination of size and Refractive Index (RI) of dispersed unlabelled subwavelength particles is of growing interest in several fields, including biotechnology, waste water monitoring and nanobubble preparations. Conventionally, the size distribution of such samples is determined via the Brownian motion of the particles, but simultaneous determination of their RI remains challenging. However, Nanoparticle Tracking Analysis (NTA) in a Digital Holographic Microscope (DHM) may be used for determination of both particle size and composition of individual subwavelength particles from the combined information about size and optical phase shift. The optical phase shift may be used for deciding the RI of the detected particles and thus used for determining the composition of the particle.

Accurate characterization of polydisperse nanoparticle samples in terms of size and composition finds applications in a wide range of fields. For instance, determination of particle size and refractive index (RI), with or without subsequent flow cytometry based separation, is of great interest in biotechnology and medicine. Although sorting of individual objects smaller than bacteria remains challenging, single nanoparticle analytics has in recent years demonstrated significant progress in the characterization of heterogeneous dispersions of submicron particulate matter such as lipid vesicles, micelles and protein aggregates, as well as viruses, extracellular vesicles and drug-delivery vehicles, to mention a few. Information about polydisperse submicron particle samples is also of interest for various industrial processes, where waste-water monitoring is one key application. Submicron gas bubbles, "nanobubbles", is another field of increasing research activity. For instance, micro- and nanobubbles are commonly used as contrast agents in medical ultrasound imaging, and are also being increasingly explored in many more large-scale applications such as flotation, cleaning, aquaculture, agriculture, and environmental remediation.

Nanoparticle Tracking Analysis (NTA) in a Digital Holographic Microscope (DHM) has been successfully used to separate particle populations in a mixture of three types of dielectric particles within a narrow size range, where conventional NTA methods based on Brownian motion alone would fail. These tests are disclosed in "Size and refractive index Determination of Subwavelength Particles and air bubbles by holographic nanoparticle tracking analysis" (Midtvedt et al., Analytical Chemistry 2020, 92, 1908-1915). Using this approach, the phase shift allowed individual populations of dielectric beads overlapping in either size or RI to be clearly distinguished and quantified with respect to these properties. The method was furthermore applied for analysis of surfactant stabilized micro- and nanobubbles, with RI lower than that of water. Since bubbles induce a phase shift of opposite sign to that of solid particles, they were easily distinguished from similarly sized solid particles made up of undissolved surfactant. This label-free means to quantify multiple parameters of suspended individual submicron particles offers a crucial complement to current characterization strategies, suggesting broad applicability for a wide-range of nanoparticle systems. Previously, DHM had primarily been used for imaging of cells and other structures of several micrometre size or more. Imaging and analysis of submicron particles differ in two crucial ways from imaging and analysis of several micrometre large objects; the optical analysis is based on Mie theory rather than geometrical optics since the particle is smaller than the image of light scattered by it; the integrated phase shift of light passing a submicron particle is of a smaller magnitude and scales with the particle volume which means a 10x smaller particle size translates to a 1000x smaller phase shift.

Typically, the size distribution of subwavelength particles in dispersion is addressed by studying their Brownian motion, either through ensemble averaged approaches, e.g. dynamic light scattering (DLS), or for individual particles, e.g. nanoparticle tracking analysis (NTA). However, it is not straightforward how to gain additional analytical information about the sample composition with these methods. For instance, in NTA, a collimated light source is used to illuminate the sample, and the light scattered off the particles of interest is detected and tracked. Although the measured scattering intensity relates to the scattering cross section of the particles, the scattered intensity depends strongly on focus depth of the objective and intensity profile of the laser source, making quantification difficult. However, RI determination for individual submicron particles has been demonstrated by analysing the light scattering angle dependence in flow cytometry. A weakness of light scattering based methods is however that they are not able to differentiate between a positive and a negative RI difference between the scattering object and the medium and thus whether the particle is a solid particle/liquid droplet or a gas bubble. Therefore, detecting bubbles on an individual basis in aqueous solutions and differentiating them from solid particles and droplets is an important problem which remains an analytical challenge and limits their usefulness in the field of nanobubble research, in which suspensions often are made up of a mixture of gas bubbles and dielectric particulate matter. It thus remains as an outstanding challenge to quantify both optical properties, such as RI and structure, and particle dimension on the individual submicron particle level. In the following, particle will be used instead of object and is intended to include solid matter, gas bubbles or liquid droplets forming a concentration of matter being distinguishable from a homogenous sample media which normally is a liquid, e.g. an aqueous solution.

Analysis of particle suspensions using holographic techniques addresses the abovementioned limitations, and label-free holographic approaches to particle tracking have indeed received increased interest the past decade. Holographic techniques allow particles to be detected and analysed within large volumes and their three-dimensional position to be accurately tracked. Another added value stems from the fact that holographic microscopy, rather than relying on the scattered intensity, obtain information about the scattered field from which more complete physical characteristics of the scatterer can be reconstructed. In brief, during holographic imaging the sample is illuminated with coherent light, and the interference pattern created by the scattered light and an unobstructed reference beam is used to reconstruct physical characteristics of the scatterer. Inline holography remains the most commonly used approach, in which the sample is imaged off-focus where the scattered light from the particle interferes with unscattered light passing beside the particle. In particle characterization applications of inline holographic imaging, the digital reconstruction is based on fitting a model describing the scattered light, typically parametrized by particle size, three-dimensional position and RI, to the observed interference pattern. Using this technique, an accuracy of $\pm$ 6 nm in radius and $\pm$ 0.01 refractive index units (RIU) has been demonstrated for a 0.8 $\mu$m radius polystyrene sphere for each recorded hologram.

In a further development of the holographic technique, named digital off-axis holography, the reference beam is external to the sample, and illuminates the camera with a slight off-axis angle compared to the object beam passing through the sample. In contrast to inline holography, this configuration allows for a direct reconstruction of the scattered field in terms of its amplitude and phase at the camera plane. The scattered field can then be numerically propagated to arbitrary axial plane which enables quantitative phase imaging of the scatterers. In contrast to inline holography, this information enables quantification of characteristics of the optical properties of the scatterer without employing assumptions on particle shape. Specifically, for each detection one can determine the integrated phase shift $\Phi = \int \phi \, (x, y) \, dA$ where $\phi$ $(x, y)$ is the spatial distribution of the phase shift induced by the particle and the integration is performed over the area covered by the particle in the microscope image. For macroscopic, transparent objects, $\Phi$ is related to particle size and refractive index as

$$\Phi = k \int (n_{\mathrm{p}} \, (x, \, y, \, z) - n_{\mathrm{m}}) \, dV = kV\Delta n \qquad (1)$$

where k is the wave number of the illuminating light, $n_{\mathrm{p}}$ $(x, y, z)$ represents the spatial distribution of the RI within the object, $n_{\mathrm{m}}$ is the RI of the surrounding medium and the integration is performed over the volume of the particle. The second equality holds for homogeneous particles of volume V and an RI of $n_{\mathrm{p}} = n_{\mathrm{m}} + \Delta n$. Note that the integrated phase defined in this way characterizes the particle without any reference to particle shape or orientation. As the dimension of the scatterer reaches and goes below the wavelength of the illumination, the dependence of the measured phase on $V$ and $\Delta n$ gradually changes since the describing physics transitions from geometrical optics to Mie theory but the essential features still apply, making the approach very appealing for subwavelength particle characterization, in particular in complex samples where particle shape is not known a priori. As an example, when investigating particles in water, the sign of $\Delta n$ is different for gas bubbles ($\Delta n < 0$) and particles ($\Delta n > 0$). The integrated phase shift attains opposite sign for these two classes of particles, thus enabling a direct differentiation within the same sample. In this spirit, phase microscopy as well as holographic microscopy have been used to study submicron bubbles, although previous studies using these techniques have been limited by low statistics and restricted to slowly moving bubbles.

Using holographic nanoparticle tracking analysis (H-NTA), e.g. in an off-axis holographic microscope, enable label-free imaging of dispersed submicron particles by demonstrating high statistic automatic determination of size and phase contrast of individual submicron dielectric particles down to 0.15 $\mu$m in radius, as well as of surfactant-coated gas bubbles. By detecting and tracking each particle in a video recording, the hydrodynamic size was determined with the help of the Brownian motion of the particles while simultaneously monitoring the phase shift induced by the particle. By combining the estimated size and integrated phase shift, several different particle populations in the same dispersion, close in size and RI, were readily identified. Further, by extending Eq. (1) to subwavelength particles using Mie scattering simulations, the RI of the particles could be successfully determined. Hence, characterization of submicron gas bubbles in terms of their hydrodynamic radius and integrated phase shift is possible such that gas bubbles can be distinguished from solid particles based on the sign of the phase contrast. In addition, aided by not having to make any assumptions on particle shape, the scaling of the integrated phase shift could be directly correlated with the hydrodynamic radius, demonstrating that the data is inconsistent with homogeneous, spherical gas bubbles. Instead, the scaling suggests that the detected scatterers are clusters formed by aggregation of individual bubbles. Various aspects of characterization of bubbles and particles by the use of an off-axis Digital Holographic Microscope (DHM) is described in the publications comprised in "Submicron gas bubbles in water" by Fredrik Eklund (ISBN 978-91-7905-349-9)

In addition to the above described approach, where the hydrodynamic size of particles is estimated based on their Brownian motion and their refractive index from the combination of hydrodynamic size and integrated phase shift, it is also possible to characterize detected particles imaged by DHM by other approaches. In particular, both size and refractive index may be derived based on the optical signal from the particles alone in combination with optical theory. This allows to accurately determine the particle size from much fewer image frames than when determining particle size based on Brownian motion. Furthermore, the medium viscosity does not need to be known to determine the size optically. Using machine learning and Mie theory to directly relate the optical signal to particle properties, this approach was recently successfully demonstrated (Midtvedt et al. 2020 arXiv 2006.11154 and ACS Nano, 2021, 15(2), 2240-2250).

Further prior art, concerning a DHM with a spatial filter for the unscattered light in the object beam, can be found in: DOMINGUEZ CABALLERO J A: "Digital holographic imaging of aquatic species, Reconstruction by the Fresnel Approximation", 1 February 2006 (2006-02-01), pages 45 - 52.

Hence, holographic nanoparticle tracking analysis (H-NTA) in a DHM has turned out to improve the possibility of determining size and composition of submicron particles. There is however still a desire for improvements of the method and system and in particular a desire to detect and characterize smaller particles in order to make the method versatile.

## GENERAL DESCRIPTION OF THE INVENTION

The invention relates to a digital holographic microscope (DHM) and a method for characterization of particles using a DHM.

Detection and characterization of very small particles in a holographic microscope is difficult due to reflections and diffraction of light in the optical arrangement. Static dust particles and other imperfections will give a non-uniform background and due to even very tiny vibrations this background will vary from image frame to image frame. Furthermore, static background patterns may also appear due to reflection of light between optical components. Detecting the scattered light of a very small particle against a varying background of light scattered by dust and reflected in the optics is very challenging. Minimizing vibrations and dirt in the optics, as well as applying a subtraction of the static background as described in prior art have limited effect. A purpose of the present invention is to provide a Digital Holographic Microscope (DHM) and method for characterization of submicron- and nanoparticles having an improved image of the objects detected. In order to achieve this purpose, the DHM and method involves a filter in order to reduce the unscattered background light, which improves the image contrast and makes it possible to enhance the intensity of the scattered light by e.g. increasing the power of the laser or the exposure time of the camera. This will enhance both the signal from the particles of interest as well as that from dirt and reflections, but the later can largely be removed by background subtraction and overall a stronger signal from the particles can be achieved. It is however not desirable to remove all the unscattered background light as it is needed as reference for the scattered light from the particles of interest. The reduction of unscattered background light is achieved by placing a spatial filter at a position in the optical beamline, downstream the sample, where the unscattered background light is focused by a first lens. A plane perpendicular to the optical beam line where the unscattered background light is focused in a small point is called a focal plane or a Fourier plane. In such a plane, the scattered light from small features in the sample is spread out over the entire beam cross-section, in contrast to the collimated background light which is focused into a small point. By placing a filter at or near the focal plane, which obscures most of the background light which is focused in the central focal point, the background light can be reduced, whereas most of the scattered light collimated over a larger surface by the first lens will pass on the sides of the filter. The spatial filter can for example be a partially transparent circular disk of a material deposited on a transparent substrate such as glass. Such a filter will advantageously be placed exactly in the focal plane, in which case it should cover a small part of the cross section of the light beam. It can however also be placed outside the focal plane; in this case it will need to cover a larger part of the light beam cross-section as the background light in this case is less focused. The semi-transparent disk is preferably round, but the shape is not very important as long as it blocks most of the focused background light and obscures a small part of the unfocused light. One practical way of making a semi-transparent disk is to deposit a thin film of a metal on a transparent substrate, something which can be made with high accuracy. Metals such as gold, aluminum or silver can be used. Other materials, such as metal oxides may be considered. To partially block light, also polarizing filters can be used. Since the object beam typically consist of polarized light, blockage of the light can be tuned by rotating a small disk of polarizing material such that its polarization angle is substantially different from that of the beam. In an alternative design of the spatial filter, it may be construed as a mirror reflecting light all over the cross-section of the light beam in a desired direction and allowing the light to be filtered off to disappear through a transparent or semitransparent area in the reflective surface at the focus of the focal plane.

A digital holographic microscope (DHM) for achieving the purpose of providing improved images of detected particles is disclosed below.

The DHM comprises, according to claim 1, a coherent light source for creating a base light beam for illuminating a sample. The coherent light source may for example be a laser. The DHM further comprises a sample holder for holding a sample to be illuminated by the coherent light source when being located in a first image plane. The DHM also includes a detector such as a camera arranged to record images of light transmitted through a sample in the sample holder. The DHM further comprises a first beam splitter for dividing the base light beam from the coherent light source into at least a first divided beam and a second divided beam. The beam splitter may be arranged upstream or downstream of said sample holder. These light beams will be guided through different paths in the DHM by a light beam guiding system. The light beam guiding system comprises suitable light guiding features such as mirrors and optical fibres for guiding the light beams. In case the beam splitter is located upstream of the sample holder, the first divided beam could be guided to illuminate the sample in the sample holder and thus be referred to as an object beam. The second beam could be guided to bypass the sample and thus be referred to as a reference beam. Hence, the DHM may be arranged such that the first beam splitter for dividing the base light beam into the at least first divided beam and second divided beam is located upstream of said sample holder and the first light beam is used as an object beam and is guided towards the sample and sample holder while said second beam is used as a reference beam and is guided to bypass the sample. In case the beam splitter is located downstream of the sample holder and the sample, the base light beam will be guided to the sample holder to illuminate the sample. Regardless of where the first beam splitter is located, there will thus be two different light beams having the same light source guided through the microscope. The light beam guiding system is further arranged to guide said first and second beam to reunite at a reuniting point before the light beams are directed to the detector.

It shall be noted that the term "beam splitter" is intended to cover any kind of device used for splitting up a beam in at least two separate, divided beams including common beam splitter cubes and fibre splitter (also commonly referred to as fibre beam splitter).

In order to further improve the setup described above, the digital holographic microscope (DHM) comprises a light reducing arrangement including a spatial filter for reducing the intensity of the light in the first divided beam. The first divided beam will comprise scattered light from particles in the sample. In the case when the base light beam is divided by the beam splitter upstream of the sample, the first divided light beam will be guided through the sample and scattered light from a particle in the sample will be present in the first divided light beam. In case the beam splitter is located downstream of the sample, the base light beam will pass through the sample and scattered light will be present in the base light beam such that scattered light will be present in both the first and second divided beam when the base light beam is split. Regardless of the positioning of the first beam splitter, the light reducing arrangement will be positioned such that it filters off light in the light beam passing through the sample. The light reducing arrangement is located downstream of the sample holder and upstream of the reuniting point of the first and second beams. The light reducing arrangement comprises at least a first lens for collimating the light scattered by a particle comprised in the sample and focusing the background light passing through the sample at a first focal plane. A partially light transparent spatial filter is arranged at or in the vicinity of the first focal plane of said first lens in order to reduce the intensity of the focused background light such that the majority, but not all, of the unscattered light passing through the sample is filtered off and the majority of the light scattered by an object, e.g. a solid particle, in the sample is guided via a light guiding system to reunite with the reference beam. The spatial filter may be a semi-transparent or opaque disk on a translucent material designed such that light scattered by the particle in the sample is allowed to pass at the sides of the disk filter to be guided further in the light beam guiding system to the detector. Alternatively, as another example, the spatial filter may be designed as a mirror having a semitransparent/semireflective area in the middle allowing the focused background light to pass through the semitransparent/ semireflective area while reflected light will be further guided in the light beam guiding system. By using a spatial filter, there will be an increased ratio of light intensity from light scattered by a particle versus light passing straight through the sample and thus an increased ratio of light comprising relevant information concerning particles in the sample. To be noted, by particle is also meant to include gas bubbles and liquid droplets in addition to solid particulate matter unsolved in the sample media, e.g. water, in which the sample is contained.

The filter should thus be designed and located in the DHM to filter off a considerable portion of the light passing straight through the sample while allowing a majority of the light scattered by particles to be guided further in the light guiding system in the microscope. Since the light scattered by a particle is collimated by the first lens to cover a wide area while the light passing straight through the sample will be focused at a focal point of the first lens, the spatial filter could be designed to cover a rather small area at or close to the focal point of the first lens. Such an arrangement will enable an essential portion of the light passing straight through the sample without being scattered to be filtered off while the majority of the light scattered by the particle may pass by the filter at the side of the filter. The closer to the focal point the filter is located, the smaller area will be needed to be covered by the filter to filter off light passing through the sample and thus allowing more of the light scattered by the particle to continue its path to the detector. According to one embodiment of the invention, the filter is designed to have a shape and size which is adapted to its location relative the focal point such that the filter covers and filters off at least 50 percent of the focused light from the first lens, preferably the filter is designed such that it covers essentially more than 90 percent, but not all, of the focused light from the first lens. The filter is preferably designed to reduce the intensity of the total light by at least 50 % and even more preferably designed to filter off at least 80 % of the total light. In general, it is desired to filter off more than 95 %, but not all, of the intensity of the total light. It should be noted that a complete removal of the background light is not desirable. It is beneficial for the method to function as desired to use the background light as a reference for the scattered light. The background light, i.e. the unscattered light passing through the sample, is preferably reduced to be of the same magnitude as the scattered light is. In practice, the background light is reduced between 80-99.5 %, i.e. by a factor 5 to 200.

The filter could be designed to have various shapes and be made from a wide diversity of material. According to one embodiment the filter is designed as a flat essentially round disc.

The filter could be made to be non-transparent or to be partially light transparent. A partially light transparent filter could be made by using a semi-transparent material covering the whole filter area or by having intermittent zones with non-transparent and transparent properties.

According to one embodiment the filter is made by depositing a metal, e.g. gold, silver, aluminium or platinum, onto a transparent sheet material, e.g. glass.

Different kinds of coherent light sources may be used in the DHM. According to one embodiment the coherent light source is selected to provide light having a coherence length of at least 0.1 mm, preferably at least 0.7 mm. This may for example be achieved by using a laser having the desired coherence length. Coherent light sources in this context may have a wide range of different temporal coherence and may also provide a mixture of coherent and non-coherent light. Short coherence length has the advantage of causing less reflection patterns in the image due to repeated back reflections in the optical beam path. For this to be an advantage, the coherence length needs to be substantially shorter than the distance between partially reflective surfaces in the beam path. A long coherence length may on the other hand have an advantage in that optical alignment becomes easier and less sensitive, as the different beams will need to have a similar optical path length within a tolerance of the same magnitude as the coherence length in order to generate a strong interference.

The light reducing arrangement could be designed to include a second lens and the filter being located between said first and second lens. The lenses need not to be identical and the first lens and the second lens may thus have different optical properties and focus length. In case a two-lens system is used, the first and second lens are preferably arranged relative each other such that their respective focal points are coinciding with each other in the space between the lenses and the filter is located in close vicinity of the coinciding focal points. Even though there is no need to use lenses having the same optical properties, it may be practically convenient to use lenses having the same optical properties and focal length as the first and second lenses.

The digital holographic microscope (DHM) also comprises a processor. The processor is programmed to quantify and compensate for the amplitude and/or phase change of the optical signal due to the spatial filter. Such a compensation is performed in order to quantify the optical field of particles in the sample and/or properties such as size and refractive index of particles in the sample. In order to get relevant and desired information about the particles detected, a compensation for the effects arising from including a filter in the DHM is desired to compensate for the reduced light intensity in the object beam passing through the sample compared to the light in the reference beam.

The inclusion of a filter in the DHM is in particular useful for being able to quantifying the absolute optical field. The filter will contribute in reducing the background light and thus increase the signal strength of scattered light from particles in a sample relative unscattered light passing through the sample. Semi-transparent spatial filters, also sometimes referred to as Fourier filters, have been previously described for enhancing contrast and decreasing the detection limit of small particles in some imaging modalities. The first mention was in Goto et al, Opt. Lett. 2015, 40, 3344 where it was used with inline holography to enhance detection and tracking of very small particles. However, the setup was only used for detecting the position of particles and no way to quantitatively measure and adjust the optical signal to compensate for the filter was discussed. Application of semi-transparent spatial filter has also been claimed for use with interferometric scattering microscopy of backscattering type (iSCAT) in GB 2 552 195 A and in the corresponding transmission mode method Coherent Brightfield imaging (COBRI) in Cheng et al, Nanoscale, 2019, 11, 568. However these mentioned methods measure only a relative optical signal and none of the publications disclose or discuss any method to compensate for the effect of the filter on the optical signal and to quantify the absolute optical field or signal.

The DHM may be designed such that the object and reference beams form an off-axis configuration when the divided beams are reunited before being detected by the detector. By using an off-axis configuration it will be possible to extract information concerning different phase shifts from each single image, e.g. if the detected object is a bubble or a solid particle. The invention is however not limited to off-axis configuration, other possible means of extracting the optical field is for example to capture several images at different optical conditions in order to reconstruct one optical field. For example, the reference beam path length can be varied between captured images, this method is known as phase shifting holography. This requires however additional computational capacity and a higher capture rate of raw images. The invention also relates to a method for characterizing submicron- and nanoparticles by the use of digital holographic microscopy (DHM). The method steps described below may be performed by the DHM described above by incorporating necessary additional features needed, e.g. a processor programmed to perform one or several of the below described steps. The method includes the the features of claim 8.

The method is thus used such that the absolute optical field of the submicron-particles in the sample is quantified from the detection of optical properties in the light scattered by particles in the sample.

In order to define the absolute optical field in an appropriate way, there is also a desire to compensate for the effect of introducing a filter in the microscope. In the analysis of the one or several images, there should also preferably be a step of quantitatively compensating for the optical effect of the filter. This compensation could be made on beforehand and be included in a software which have one or several sets of compensating parameters to be used depending on which filter and/or kind of sample to be used.

The compensation for the optical effect of the filter in order to quantify the absolute optical field from the scattered light of the sub-micron particles in a sample may be performed by various different methods. The compensation could for example be performed in the following way, according to claim 9, to allow the absolute optical field to be quantified and expressed as a complex number by performing the following steps:

i. determining the optical field of light having passed the particle,

ii. normalizing the optical field of the illuminating background light and subtract the same from the optical field of light having passed the particle to isolate the optical field of the particle,

iii. dividing or multiplying the optical field of the particle with a predetermined compensation factor to compensate for the effect of the spatial filter. This step is intended to include any equivalent mathematical operation.

In this method, the optical field as disclosed in paragraph i. may be expressed as a complex number and the compensation factor used in paragraph iii. will in this case thus also be in the form of a complex number.

The compensation may be made by sampling a multitude of images on site by recording images with and without the filter in order to determine relevant parameters to be used for compensating for the filter. When recording the images to be used for deciding the compensation, samples comprising particles with known characteristics is preferably used, e.g. particles with a known refractive index and known size or size distribution. In general, this method is also used when determining compensation parameters for a filter included in a software.

According to one embodiment of the method, a size and/or shape of particles in the sample may be estimated by analysing the recorded images and said estimated size may be used together with a detected phase shift between the object and reference beams in order to estimate a Refractive Index (RI) of the detected particle for determination of the composition of the detected particle, e.g. distinguish a solid substance from a gas bubble. It is further possible that a size and/or shape and/or optical field and/or refractive index of particles in the sample may be estimated by quantitatively compensating for the filter to extract the absolute optical signal of the particles. The different phase shift of the light in the object beam and the reference beam, originating from the very same coherent light source, depends upon the properties of particles detected in the sample and it may be thus be possible to distinguish particles having different properties and different refractive index indices.

In order to further improve the method and characterization of the detected particles, the relative intensity of the object beam and the reference beam could be adjusted in order to optimize interference of the object and reference beam. The two beams should preferably have intensities of the same magnitude when they interfere at the camera to generate as sharp interference pattern as possible in the recorded image.

Still further improvements may be achieved if background noise is reduced by comparing recorded images and subtracting stationary features from different images. This means that the sample is recorded in a first image and background noise in each first image is reduced by subtracting one or a combination of several other recorded images, said other images are selected in order to reduce background noise in the first image effectively. The recorded microscope images will have a background speckle pattern which is due to light scattering from imperfections in the optical system, such as dust or scratches. Coherent reflections within and between optical components and the sample will also contribute to the non-uniform background. An obvious solution to this problem is to subtract a previous or later image from the presently analysed one, as this will remove these static imperfections from the image and give a uniform background against which the particles can be more easily detected. However, even very tiny vibrations may cause fluctuations in light intensity as well as lateral movement of the background pattern, making subtraction of one arbitrary image frame inadequate. One improvement which has been previously described (Midtvedt et al, Analytical Chemistry, 2020) is to iterate through a selection of 20-30 previous or later image frames and select those for subtraction which best minimize the background of the present image frame upon subtraction. An average of the selected frames is then subtracted from the present frame.

There are different ways to estimate the size of a particle. A first example of a suitable method is to analyse the Brownian motion of the particle whereby a parameter corresponding to the size of a particle, e.g. hydrodynamic diameter, may be estimated. A second example of a method is to estimate the size based on the optical field information for the particle and optical theory, such as Mie theory. The first method will provide the hydrodynamic diameter of the particle, whereas the second method will provide an optical diameter which is not necessarily identical with the hydrodynamic diameter.

The hydrodynamic diameter or size can be used in combination with an optical property such as phase shift to estimate a Refractive Index (RI) of the detected particle. For example, by using Brownian motion for deciding the hydrodynamic diameter or size of the particle, the refractive index (RI) can be determined from the hydrodynamic diameter or size in combination with the integrated phase shift of light passing the particle.

As described above, an alternative way of deciding the size of the particle is to use optical field information and optical theory. The size of the particle can be estimated from the absolute optical signal of the particle in relation to optical theory. It should be noted that refractive index and size can be determined simultaneously from the optical signal / optical field information of the particle.

In addition to these different selections of data to extract information from, there is also the possibility to choose between classical analysis or deep learning approaches at different stages in the analysis. Deep learning often has advantages when the signal to noise ratio is low, and also often provides shorter computation time. Hence, there is a multitude of methods in addition to the two examples of methods disclosed above which may be used for determining the size of a particle. In case a general method of deciding the size of a particle is desired, the absolute optical signal of the particles may be extracted and the size of the particle can be estimated from the absolute optical signal of the particle in relation to optical theory.

The method described herein may be used for detecting different particle populations in the same sample. The particle populations may for example be identified through their respective relationship between two independent variables where one variable is the hydrodynamic diameter or diffusivity or any variable derived therefrom, and the other variable is an optical property such as integrated phase shift. In an alternative method, different particle populations in the same sample are identified through their respective relationship between two independent optical variables such as the integrated phase shift and optical extinction cross section, or related variables.

In order to be able to extract absolute quantitative data from a sample, the effect of the filter should be taken into account as already discussed above. In addition to the previously discussed method for compensating for the effect of the spatial filter, the effect of the filter could be quantified by imaging a sample of particles both with and without the filter and numerically comparing the optical signal from the two measurements. The effect of the filter could also be calculated based on of its known projection area, thickness and material properties. By quantitatively compensating for the filter, the absolute optical field of the individual particles can be quantified. The absolute optical field can be used to directly derive physical properties of the particle through well-known relations as described under prior art.

The method may include the use of a processor being programmed to quantify and compensate for the amplitude and/or phase change of the optical signal due to the spatial filter in order to quantify properties such as size, refractive index, relative phase shift, optical field, and other properties of particles in the sample. When light passes through a particle, some of the light will be scattered away and thus the intensity will decrease, and the light will also be shifted in phase relative the unscattered background light which has not passed a particle. The change in light intensity and phase relative to the background light can be predicted by Mie theory for a particle of certain size, refractive index and shape. For particles much smaller than the wavelength of light, the shape is of little importance and particles can be approximated as spheres. The size and refractive index can thus be determined from the optical field of the particle. The optical field of the particle may be expressed as a complex number, which in polar form has an amplitude (absolute value, modulus) and a phase (argument). However, when adding a spatial filter according to the present invention, the relation between light that has passed a particle and the background light is altered. The background light strongly decreases in intensity and also usually changes phase. This makes it impossible to correlate the optical field with size and refractive index of a particle with the help of Mie theory. However, it is possible to quantify the intensity and phase shift of the background light with the help of calibration particles of known size and refractive index and subsequently use this information to compensate for the spatial filter. One way to do this is to:

1) Record and analyse a video sequence of known calibration particles both with and without the spatial filter.

2) For both measurements, first normalize and subtract the optical field of the background illumination from the optical field at the individual particle, to isolate the optical field information of the particle.

3) Determine the amplitude and phase of the particle population in the two measurements, and determine a scaling factor $r$ for amplitude by dividing the amplitude with spatial filter by amplitude without spatial filter, and determine a scaling term $\theta$ for phase by subtracting the phase with spatial filter from the phase without spatial filter.

4) Use this information in subsequent measurements to adjust the amplitude and phase of each detected particle with the predetermined scaling factors such that $z_1 = z_2 / (re^{i\theta})$ where $z_1$ is the optical field of the particle without filter and $z_2$ is the optical field with filter.

5) Determine the size and refractive index of each particle based on correlation of phase and amplitude with Mie theory.

There are possible variations to the described method to mathematically compensate for the spatial filter in order to correlate the optical field information with Mie theory, for instance the compensation may be made without subtracting the background field and instead compensate the background field for the spatial filter. Another possibility is to instead of using Mie theory, apply deep learning strategies to analyse data where a spatial filter has been applied to achieve mathematically equivalent results. In practical use of the invention, it has been found that the compensation factor remains stable for long time for the same filter and microscopy setup. In combination with the fact that an imaging and analysis method is used which provides absolute rather than relative data, the invention can be carried out and provide reliable and accurate results without need for daily calibration with known particles. This is in contrast with methods which provide relative data, such as conventional NTA using darkfield microscopy or flow cytometry measuring light scattering at different angles, which often require comparison with known particles during the same measurement session to make quantitative use of the optical signal.

BRIEF DESCRIPTION OF DRAWINGS

FIG. 1A    discloses path of unscattered light in a double lens arrangement to be used in a digital holographic microscope (DHM) according to prior art

FIG. 1B    discloses flow path of scattered light in a double lens arrangement to be used in a digital holographic microscope (DHM) according to prior art

FIG. 1C    discloses a stand-alone double lens arrangement provided with a spatial filter

FIG. 1D    discloses a stand-alone double lens arrangement provided with a spatial filter placed at an angle to avoid back reflections

FIG. 2A    discloses a built-in lens arrangement provided with a spatial filter

FIG. 2B    discloses a built-in lens arrangement provided with a mirror filter

FIG. 3    discloses a digital holographic microscope (DHM) set up according to prior art

FIG. 4    discloses a digital holographic microscope (DHM) set up comprising a stand-alone double lens arrangement with a spatial filter

FIG. 5    discloses a digital holographic microscope (DHM) set up comprising a stand-alone double lens arrangement with a spatial filter and a means for separating a reference beam downstream of the sample

Fig. 6A    illustrates a small area of a captured image where a particle is visible in the middle and diagonal lines of the interference pattern generated by the off-axis configuration.

Fig. 6B    illustrates a Fourier transform of the entire captured image, showing the three separate Fourier peaks.

Fig. 6C    illustrates the phase contrast image generated from the image in Fig. 6A.

Fig. 7A    discloses the optical field of 240nm diameter polystyrene particles plotted in a complex plane, as measured without filter, with filter, and with filter and numerical compensation.

Fig. 7B    discloses the optical field of 240 nm and 190nm diameter polystyrene particles plotted in a complex plane, as measured with filter and numerical compensation.

DETAILED DESCRIPTION OF THE INVENTION

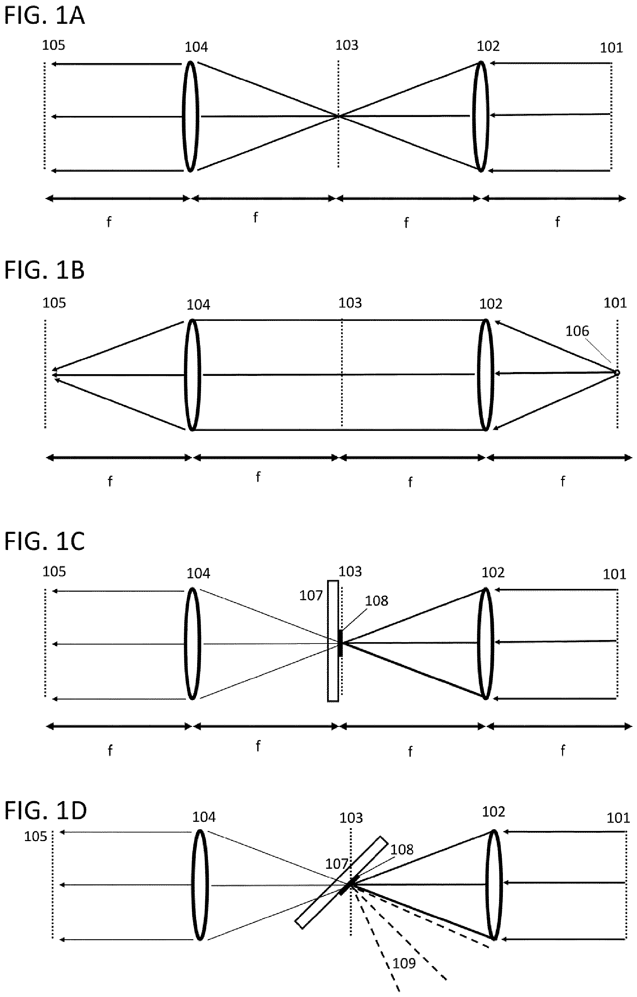

Fig. 1A and 1B show a double lens arrangement for creating a focal plane 103 according to prior art. The double lens arrangement comprises a first lens 102 and a second lens 104 having a focal length f. Fig. 1A. shows the path of unscattered light, represented by arrows indicating light flowing from right to left, from a first image plane 101 which propagates in parallel with the optical axis of the first lens 102, which focuses the light at the focal plane 103. The light will continue to reach the second lens 104 where the light will be caused to propagate in parallel once again and an image may be recorded at a second image plane 105.

In Fig. 1B, the path of scattered light is shown. Light scattered by a small particle 106, e.g. a solid substance or bubble, in the sample in the first image plane 101 is collimated by the first lens 102 to cover the entire object beam cross-section at the focal plane 103. The double lens arrangement in Fig. 1A-C is known as a 4f-arrangement, where f is the focal length of the lenses. In this arrangement both lenses 102, 104 have the same focal length. It is however not strictly necessary for the first and second lenses 102, 104 to have the same focal length for the arrangement to fulfil its function, using different focal lengths will merely magnify or reduce the image recorded at the second image plane 105.

In Fig. 1C, a double lens arrangement as disclosed in figures 1A and 1B is disclosed but in this case, there is a transparent plate 107 made by e.g. glass with a disk filter of semi- or non-transparent material in its centre placed at the focal plane to function as a spatial filter 108. The focused light is then obscured to a large extent (for example 90%) whereas the very most of the scattered light which is spread out over the entire object beam cross-section is passing unobstructed to be further guided to the detector.

In Fig. 1D, a similar arrangement as disclosed in Fig. 1C is disclosed having a transparent plate 107 located in the double lens arrangement. The transparent plate is provided with a disk of semi-transparent and reflective material such as a thin metal film to function as a spatial filter 108. The arrangement in this figure differs from the one disclosed in Fig. 1C in that the transparent plate 107 is placed at an angle to avoid back reflections within the beam path. The reflected light 109 follows a cone shaped path similarly as it would if it had not been reflected. When using a metallic filter of transmission type, a possible problem is that the metal reflects light backwards, which is subsequently reflected forwards by upstream components, causing reflection patterns in the image. This may be remediated by placing the filter at a certain angle such that the reflected light 109 exits the beam path as described in this figure. Alternative methods could also be used to avoid backwards reflection, e.g. covering the metal with antireflection coating.

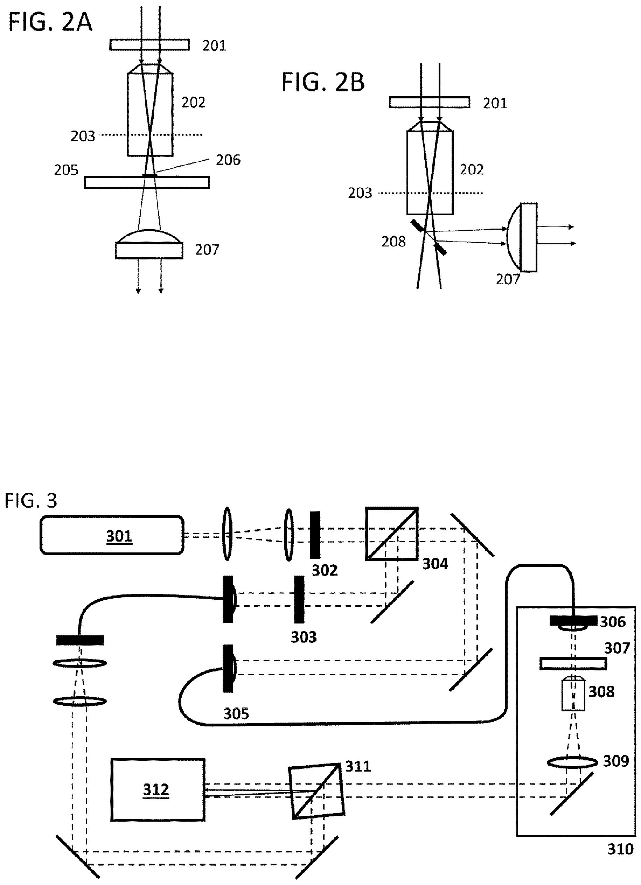

In Fig. 2A is disclosed an alternative option of a lens arrangement having a focal plane 203 where unscattered light from a sample holder in a first image plane 201 is focused by one or several lenses in a microscope objective. In case there is a sample comprising a particle or bubble, the light scattered by the particle or bubble will be collimated by the first lens in a similar way as disclosed in Fig. 1B. Instead of adding two lenses in the object beam line to create a focal plane, another possibility is to use the focal plane 203 already present in the microscope. The focal plane 203 is in general present somewhere downstream the lenses in a microscope objective 202. In particular for higher magnifications, the focal plane 203 is usually placed inside a barrel of the objective 202 and is thus somewhat technically difficult to place a filter at. However, a filter can be placed slightly downstream the focal plane 203 as shown in Fig. 2A. In this case, the semi- or non-transparent disk forming the spatial filter 206 located on the transparent plate 205 will need to cover a larger area in order to obscure the same amount or portion of the focused background light compared to if the spatial filter 206 should have been placed in the focal plane 203. Consequently, a larger share of the light scattered by the sample will be lost. A second lens 207, e.g. a tube lens, will collimate the background light which passes through the filter. The second lens will also focus the light scattered by a particle in the sample holder, which was collimated by the first lens in the microscope, at a second image plane (not shown) in a similar manner as disclosed in Fig. 1B.

Fig 2B demonstrates that instead of using a transmission type of filter as disclosed in Fig. 1C and 2A, it is also possible to use a reflection type of filter. In this example, the set-up is similar to the setup in Fig. 2A with the sample holder in the first image plane 201 and the focal plane 203 inside the barrel of the objective 202 and the first lens forming part of the microscope. However, in this set up a mirror 208 of which a central area is semi-transparent, is placed behind the microscope objective 202. The mirror 208 reflects the very most of the scattered light, whereas the majority of the focused background light passes through the centre of the mirror 208. The reflected light is directed to the second lens 207 and continues downstream through the optical beam path.

Fig. 3 shows an example of a digital holographic microscope (DHM) set-up according to prior art. The set-up is in this case built around a commercial microscope body of the inverted type, which means that an objective 308 is under the sample. The light beam from a coherent light source 301, such as a laser, is expanded by lenses and directed towards a first beam splitter 304. The first beam splitter 304 is of a polarizing type, which splits the light into two orthogonally polarized beams. The laser beam is already partially polarized. By rotating a first half-wave plate 302 between the laser and the first beam splitter 304, the direction of polarization can be adjusted and thereby the relative intensity of the two outgoing beams can be adjusted. A second half-wave plate 303 in the reference beam line adjusts that beam to have the same polarization as the object beam when they meet again at a second beam splitter 311. Hence, a beam splitter is used both as a device for splitting a beam as well as for unifying light beams. The object beam is collected into an optical fibre 305 which connects to a collimator lens 306 which illuminates the sample at the first image plane 307 from above. The liquid sample can for example be placed between a microscope slide and a cover slip, or in a microfluidic channel. The latter option is advantageous in that a controlled liquid flow can be achieved and the thickness of the liquid sample is well defined. After the sample, the beam passes through a microscope objective 308, a tube lens 309, and via a mirror exits the microscope body 310. The object beam is subsequently recombined with the reference beam at the second beam splitter 311. The second beam splitter is slightly rotated compared to the direction of the two beams, which causes the two beams to reach the detector with a slight angle relative to each other, which creates an interference pattern in the image recorded by a camera 312, e.g. a CCD camera.

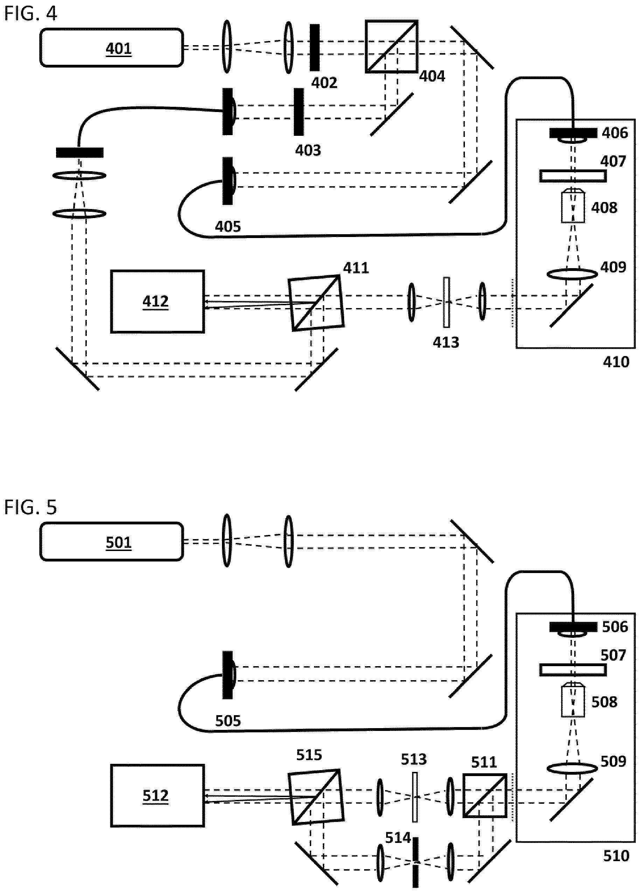

Fig. 4. shows a DHM set-up according to an embodiment of the claimed invention. The overall set up is similar to the set-up of Fig. 3. Fig. 4 discloses a DHM comprising a coherent light source 401 from which light is guided via first half wave plate 402 to a first beam splitter 404 which divides the light into a first divided beam which will serve as an object beam guided to the sample holder in order to illuminate a sample and a second beam functioning as a reference beam being guided to bypass the sample holder and sample. The reference beam is guided via a second half-wave plate 403 and suitable light guiding means such as mirrors and optical fibres to a second beam splitter 411. The object beam is guided via similar light guiding means including mirrors and an optical fibre 405 to a microscope body 410. In the microscope body, the light is directed to a collimator lens 406 illuminating a sample at the first image plane 407. After the sample, the beam passes through a microscope objective 408, a tube lens 409, and via a mirror exits the microscope body 410. Hence, these parts correspond to the set-up in Fig. 3. However, the set-up in Fig. 4 further comprises two lenses and a spatial filter 413, e.g. a disk filter, in the focal plane between them as disclosed in the stand-alone double lens arrangement depicted in Fig. 1C. The light passes through the double lens arrangement and the spatial filter 413 before it enters the second beam splitter 411 to be reunited with the reference beam before being directed to the camera 412. In the microscope body, the objective 408, tube lens 409 and mirror are positioned to create an image plane at the port where the object beam exits the microscope as disclosed in Fig. 3. The 4f-arrangement therefore begins at this plane. Note that Fig. 4. is not drawn to scale and the distance from the first image plane to the first lens is in reality the same as from the second lens to the camera.

It is obvious that the stand-alone double lens arrangement of Fig. 1C or 1D could be replaced with a built-in lens arrangement as disclosed in Fig. 2A or 2B to be used in the embodiment disclosed in Fig. 4. This arrangement may for example be achieved by placing a disk filter at or in the vicinity of a focal plane between the objective lens 407 and the camera 412 and thus replace the stand-alone arrangement.

Fig. 5 discloses a DHM setup similar to Fig. 4, but where the first divided beam to be used as the object beam being guided to the sample holder in order to illuminate the sample and the second divided beam to be used as reference beam bypassing the sample are formed from splitting the base light beam in a first beam splitter 511 located downstream of the sample. In this arrangement, the first beam splitter 511 is placed downstream of the objective lens 508 to split up the base light beam in at least a first and a second divided beam to be used as an object beam and a reference beam. To make use of this second divided beam as a reference beam in an off-axis DHM arrangement, it should preferably contain mostly unscattered background light. This is achieved by focusing the reference beam similarly as the object beam but placing a pinhole or transparent area 514 at the centre of the focal plane (instead of using an obstructive filter as for the first divided beam functioning as an object beam) through which the focused background light can pass while scattered light is obstructed by the otherwise opaque plate preventing light from passing through. Note that unlike in the figure, the two beam paths will need to be of similar length to enable good interference, unless the laser light has very long coherence length.

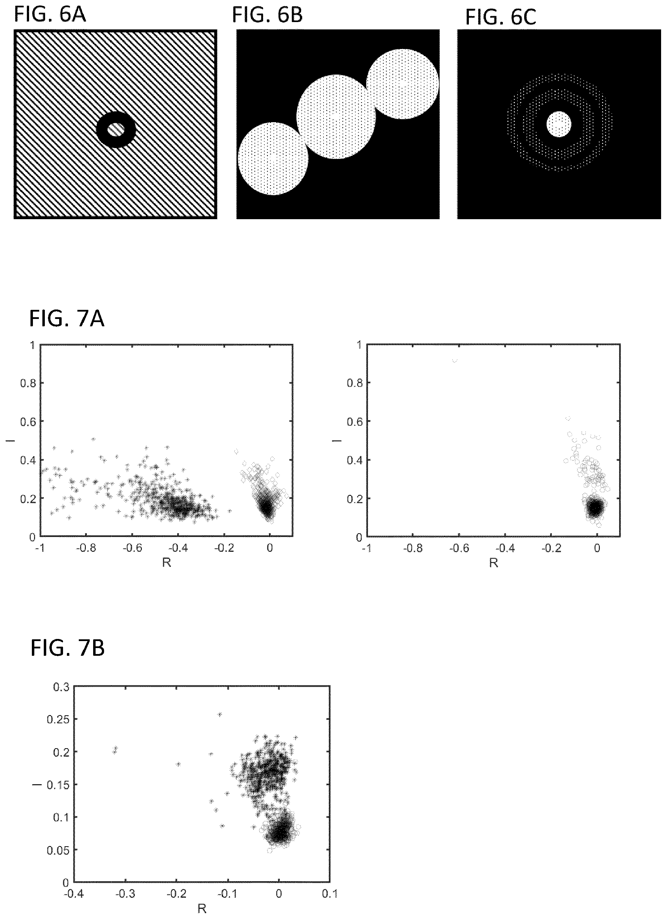

Fig. 6A. discloses an example of an interference pattern caused by a beam splitter - being slightly rotated, e.g. the second beam splitters 311, 411, 515 as disclosed in Fig. 3, Fig. 4 and Fig. 5, respectively. A rotated beam splitter will cause the first and second beam to be slightly off-set relative each other and an interference pattern can be seen as diagonal lines. Fig. 6A. shows a magnified area of a recorded image, with a dispersed particle. Due to the interference pattern, a Fourier transform of the image will produce three peaks/images as disclosed in Fig. 6B. Field information can be extracted from the two side peaks. By numerically shifting one side peak to the centre and applying a low pass filter, the optical information of interest is separated. By inverse Fourier transform, the optical field can be determined at different planes along the optical axis in the sample. This can be used to generate bright field as well as phase contrast images at different planes, an example of a phase contrast image is seen in Fig. 6C which corresponds to the recorded image in Fig. 6A. In this 3-dimensional volume of optical field information, detection and tracking of particles are subsequently performed.

In order to achieve such an interference pattern as can be seen in Fig. 6A, the light intensities of the object and reference beams should preferably be of similar magnitude. Since the optical information of interest is extracted from irregularities in the parallel interference lines, these lines need to be sharp and clearly visible in the image. The intensity loss is however much larger in the object beam than in the reference beam since the light passes more optical components in the object beam, such as the sample and the many lenses in the microscope objective. When adding a filter of the transmission type as described in some versions of the present invention, the intensity loss increases considerably. The intensity of the two beams must therefore be adjusted so that much more light intensity is being directed to the object beam than to the reference beam, in order for the light intensity to be of similar magnitude at the camera. In the optical set-up described in Figs. 3 and 4, the intensities of the object and reference beams are adjusted with the help of the first half-wave plates 302, 402 and the second half-wave plates 303, 403 in the respective set-ups in combination with the polarizing first beam splitters 304, 404. The first half-wave plates 302, 402 adjust the polarization angle of the light directed to the beam splitters 304, 404 in the respective systems, which splits the light in the respective set-ups into two orthogonally polarized beams. The relative intensity of the object and reference beams in the microscope set ups in Fig. 3 and 4 will depend on the polarization angle of the incoming light. In order for the two beams to have the same polarization angle when they reunite at the non-polarizing second beam splitters 311, 411 in the respective set-ups, the polarization angle of the reference beam is adjusted with the second half-wave plates 303, 403. Several other means of adjusting the relative intensity of the object and reference beams are possible. What is important is that the relative intensity of the two beams should be of similar magnitude at the camera. The same reasoning also applies to the optical set up in Fig. 5.

In an alternative embodiment, a laser directly coupled to a first optical fibre is used and the light in the first fibre is directly split into two different fibres which are directed to the reference and object beam respectively. The relative intensity of light in the two fibres can be adjusted using fibre-coupled components in several different ways, for example by using a fixed ratio fibre-splitter in combination with fibre-coupled attenuators, by using a fibre-switch to switch between different fixed ratio fibre beam splitters or by using a variable ratio fibre-splitter.

Example 1

A spatial filter was used which consisted of a circular disk of gold, 0.5 mm in diameter and 35 nm in thickness, sputtered onto a transparent glass plate. This filter was placed in the Fourier plane (focal plane) between two lenses such as in Fig. 4, at an angle to avoid back reflections such as in Fig. 1D. The relative beam intensities were adjusted so that much more of the light was directed to the object beam than when not using the spatial filter, and an interference pattern was clearly visible in the image. A sample of 240 nm diameter Polystyrene latex (PSL) was used for calibration since these particles were detectable both with and without the spatial filter. Fig 7A shows the optical field of these particles with (stars) and without (circles) spatial filter in the complex plane. The optical field of the particles depicted here is relative to the illumination background, and with the filter the field amplitude is several times larger as the illumination background is weaker. The scaling factor for amplitude and phase of the optical field of the particles were determined to be r = 2.9 and θ = 1.1 respectively. The 240 nm PSL particles measured with the filter in place and subsequently numerically compensated are plotted as diamonds in the complex plane and it can be seen that they overlap well with the particles measured without the filter. Subsequently, a sample of 190 nm diameter PSL particles was measured with the filter and subsequently numerically compensated. Fig. 7B shows numerically compensated field of 190 nm (circles) and 240 nm (stars) PSL particles. Following compensation, both particle populations display optical characteristics expected from Mie theory.

**Claims**

1.  A digital holographic microscope, DHM, comprising

    - A coherent light source (401, 501) for creating a base light beam for illuminating a sample in a first image plane (101,201,407, 507),
    - A sample holder for holding a sample in the first image plane (101, 201, 407, 507) to be illuminated,
    - A detector, e.g. a camera (412, 512), arranged to record images of light transmitted through a sample in the sample holder,
    - A first beam splitter (404, 511) for dividing the base light beam from the coherent light source (401, 501) into at least a first divided beam and a second divided beam, said first beam splitter (404, 511) for dividing the base light beam into different portions being located upstream or downstream of the sample holder, and
    - A light beam guiding system for guiding said base light beam or said first divided light beam through the sample and further arranged to guide said first and second divided beam to reunite at a reuniting point before the first and second beams are directed to the detector,
    wherein said digital holographic microscope further comprises a light reducing arrangement for reducing the intensity of the light in the first divided beam, said light reducing arrangement comprising
    - at least a first lens (102) for collimating the light in the first divided beam scattered by a particle (106) comprised in the sample and focusing the unscattered light passing through the sample in a focal plane (103, 203), and
    - a partially light transparent spatial filter (108, 206, 413, 513) arranged at or in the vicinity of the focal plane (103, 203) of said first lens (102) in order to reduce the intensity of the focused unscattered light passing through the sample located in the first image plane (101, 201, 307, 407, 507) such that the majority, but not all, of unscattered light passing through the sample is filtered off and the majority of the light scattered by a particle (106) in the sample is guided via a light guiding system to reunite with said second divided beam.

2.  A digital holographic microscope according to claim 1 **characterized in that** the filter (108, 206, 413) is designed to have a shape and size which is adapted to its location relative the focal plane (103, 203) such that the filter (108, 206, 413, 513) filters off at least 50 percent of the focused light from the first lens.

3.  A digital holographic microscope according to any previous claim **characterized in that** the filter (108, 206, 413, 513) is designed to reduce the intensity of the total light in the object beam by at least 50 %, preferably at least 80 %, and most preferably at least 95%.

4. A digital holographic microscope according to any previous claim **characterized in that** said light reducing arrangement comprises a second lens and said filter (108, 206, 413, 513) being located between said first lens (102) and second lens (104, 207).

5. A digital holographic microscope according to claim 4 **characterized in that** said first lens (102) and second lens (104, 207) are arranged relative each other such that their respective focal planes (103, 203) are coinciding with each other in the space between the lenses and the filter (108, 206, 413, 513) is located in close vicinity of the coinciding focal points.

6. A digital holographic microscope according to any previous claim **characterised in that** the first and second beams are reunited such that they are forming an off-axis configuration when being detected by the detector.

7. A digital holographic microscope according to any previous claim **characterised in that** said first beam splitter (404) for dividing the base light beam into the at least first divided beam and second divided beam is located upstream of said sample holder and said first light beam is used as an object beam and is guided towards the sample and sample holder while said second beam is used as a reference beam and is guided to bypass the sample.

8. A method for characterizing submicron- and nanoparticles by the use of digital holographic microscopy, said method includes the use of

  - a coherent light source (401) for creating a base light beam for illuminating a sample,
  - a sample holder located in a first image plane for holding a sample to be illuminated,
  - a detector such as a camera (412) arranged to record images of light transmitted through a sample in the sample holder,
  - a first beam splitter (404, 511) for dividing the base light beam from the coherent light source into at least a first divided beam and a second divided beam, said first beam splitter (404, 511) for dividing the base light beam into a first divided beam and a second divided beam being located upstream or downstream of the sample holder, and
  - a light beam guiding system for guiding said base light beam or said first divided light beam through the sample and further arranged to guide said first and second divided beam to reunite at a reuniting point before the first and second beams are directed to the detector,
  wherein said method further involves the use of a light reducing arrangement located downstream of the sample holder and upstream of the reuniting point of the at least first and second divided beams, said light reducing arrangement comprising
  - at least a first lens (102) for collimating the light scattered by a particle (106) comprised in the sample and focusing the unscattered light passing through the sample at a first focal point, and
  - a partially light transparent spatial filter (108, 206, 413, 513) arranged at or in the vicinity of the focal plane (103, 203) of said first lens in order to reduce the intensity of the focused unscattered light from either the base light beam or first divided light beam passing through the sample located in the first image plane (101), 201, 307, 407, 507)
  such that the majority, but not all, of the unscattered light in the light beam passing through the sample is filtered off and the majority of the light scattered by the particle (106) is guided via the light guiding system to the detector and optical properties of the scattered light originating from the submicron-particles in the sample are detected by recording one or several images and analysing the one or several images.

9. A method according to claim 8 **characterized in that** the absolute optical field of the sub-micron particles in the sample, expressed as a complex number, is quantified by

  i. determining the optical field of light having passed the particle, by determining phase shift and amplitude from analysing one or several images recorded
  ii. normalizing the optical field of the illuminating background light and subtract the same from the optical field of light having passed the particle to isolate the optical field of the particle, e.g. by recording and analyse a video sequence of known calibration particles both with and without the spatial filter
  iii. dividing or multiplying the optical field of the particle with a predetermined compensation factor, to compensate for the effect of the spatial filter, e.g. by determining a scaling factor r for amplitude by dividing the amplitude with spatial filter by amplitude without spatial filter, and

  determine a scaling term $\theta$ for phase by subtracting the phase with spatial filter from the phase without spatial filter.

10. A method according to any of claims 8-9 **characterized in that** the relative intensity of the first divided beam, also referred to as an object beam, and the second divided beam, also referred to as reference beam, is adjusted in order to optimize interference of the object and reference beam.

11. A method according to any of claims 8-10 **characterized in that** the hydrodynamic diameter or size of the particle is estimated by analysis of its Brownian motion and the hydrodynamic diameter is used in combination with an optical property such as phase shift to estimate a Refractive Index (RI) of the detected particle.

12. A method according to any of claims 9 or 10 **characterized in that** the size of the particle is estimated from an absolute optical signal of the particle in relation to Mie theory.

13. A method according to any of claims 8-12, **characterized in that** different particle populations in the same sample are identified through their respective relationship between two independent variables where one variable is the hydrodynamic diameter or diffusivity or any variable derived therefrom, and the other variable is an optical property such as integrated phase shift.

14. A method according to any of claims 8-12, **characterized in that** different particle populations in the same sample are identified through their respective relationship between two independent optical variables such as the integrated phase shift and optical scattering cross section, or related variables.

15. A method according to any of claims 8-14, **characterized in that** the effect of the filter (108, 206, 413, 513) is quantified by imaging a sample of particles both with and without the filter and numerically comparing the optical signal from the two measurements.

**Patentansprüche**

1. Digitales holographisches Mikroskop, DHM, umfassend

   - eine kohärente Lichtquelle (401, 501) zum Erzeugen eines Basislichtstrahls zum Beleuchten einer Probe in einer ersten Bildebene (101, 201, 407, 507),
   - einen Probenhalter zum Halten einer zu beleuchtenden Probe in der ersten Bildebene (101, 201, 407, 507),
   - einen Detektor, z. B. eine Kamera (412, 512), der dazu angeordnet ist, Bilder von Licht aufzuzeichnen, das durch eine Probe in dem Probenhalter übertragen wird,
   - einen ersten Strahlteiler (404, 511) zum Teilen des Basislichtstrahls von der kohärenten Lichtquelle (401, 501) in mindestens einen ersten geteilten Strahl und einen zweiten geteilten Strahl, wobei sich der erste Strahlteiler (404, 511) zum Teilen des Basislichtstrahls in verschiedene Teile stromaufwärts oder stromabwärts des Probenhalters befindet, und
   - ein Lichtstrahlführungssystem zum Führen des Basislichtstrahls oder des ersten geteilten Lichtstrahls durch die Probe, das ferner dazu angeordnet ist, den ersten und den zweiten geteilten Strahl so zu führen, dass sie sich an einem Wiedervereinigungspunkt wiedervereinigen, bevor der erste und der zweite Strahl auf den Detektor gerichtet werden,

   wobei
   das digitale holographische Mikroskop ferner eine lichtreduzierende Anordnung zum Reduzieren der Intensität des Lichts im ersten geteilten Strahl umfasst, wobei die lichtreduzierende Anordnung Folgendes umfasst:

   - mindestens eine erste Linse (102) zum Kollimieren des Lichts im ersten geteilten Strahl, der durch ein Partikel (106) gestreut wird, das in der Probe umfasst ist, und Fokussieren des ungestreuten Lichts, das durch die Probe hindurchtritt, in einer Brennebene (103, 203), und
   - ein teilweise lichtdurchlässiges Raumfilter (108, 206, 413, 513), das an oder in der Nähe der Brennebene (103, 203) der ersten Linse (102) angeordnet ist, um die Intensität des fokussierten ungestreuten Lichts, das durch die Probe durchtritt, die sich in der ersten Bildebene (101, 201, 307, 407, 507) befindet, so zu reduzieren, dass der Großteil, aber nicht die Gesamtheit, des durch die Probe hindurchtretenden ungestreuten Lichts abgefiltert wird und der Großteil des durch ein Partikel (106) in der Probe gestreuten Lichts über ein Lichtführungssystem zur Wiedervereinigung mit dem zweiten geteilten Strahl geführt wird.

2. Digitales holographisches Mikroskop nach Anspruch 1, **dadurch gekennzeichnet, dass** das Filter (108, 206, 413) dazu ausgelegt ist, eine Form und Größe aufzuweisen, die an seine Position relativ zur Brennebene (103, 203) so angepasst ist, dass das Filter (108, 206, 413, 513) mindestens 50 Prozent des fokussierten Lichts von der ersten Linse abfiltert.

3. Digitales holographisches Mikroskop nach einem der vorhergehenden Ansprüche, **dadurch gekennzeichnet, dass** das Filter (108, 206, 413, 513) dazu ausgelegt ist, die Intensität des Gesamtlichts im Objektstrahl um mindestens 50 %, vorzugsweise mindestens 80 % und am meisten bevorzugt mindestens 95 % zu reduzieren.

4. Digitales holographisches Mikroskop nach einem der vorhergehenden Ansprüche, **dadurch gekennzeichnet, dass** die lichtreduzierende Anordnung eine zweite Linse umfasst und das Filter (108, 206, 413, 513) sich zwischen der ersten Linse (102) und der zweiten Linse (104, 207) befindet.

5. Digitales holographisches Mikroskop nach Anspruch 4, **dadurch gekennzeichnet, dass** die erste Linse (102) und die zweite Linse (104, 207) relativ zueinander so angeordnet sind, dass ihre jeweiligen Brennebenen (103, 203) im Raum zwischen den Linsen zusammenfallen und das Filter (108, 206, 413, 513) sich in unmittelbarer Nähe der zusammenfallenden Brennpunkte befindet.

6. Digitales holographisches Mikroskop nach einem der vorhergehenden Ansprüche, **dadurch gekennzeichnet, dass** der erste und der zweite Strahl so wiedervereinigt werden, dass sie eine außeraxiale Konfiguration bilden, wenn sie vom Detektor detektiert werden.

7. Digitales holographisches Mikroskop nach einem der vorhergehenden Ansprüche, **dadurch gekennzeichnet, dass** sich der erste Strahlteiler (404) zum Teilen des Basislichtstrahls in mindestens den ersten geteilten Strahl und den zweiten geteilten Strahl stromaufwärts des Probenhalters befindet und der erste Lichtstrahl als Objektstrahl verwendet und in Richtung der Probe und des Probenhalters geführt wird, während der zweite Strahl als Referenzstrahl verwendet und so geführt wird, dass er die Probe umgeht.

8. Verfahren zur Charakterisierung von Submikrometer- und Nanopartikeln durch die Verwendung digitaler holographischer Mikroskopie, wobei das Verfahren die Verwendung von Folgenden umfasst:

   - einer kohärenten Lichtquelle (401) zum Erzeugen eines Basislichtstrahls zum Beleuchten einer Probe,
   - einem Probenhalter, der sich in einer ersten Bildebene befindet, zum Halten einer Probe, die beleuchtet werden soll,
   - einem Detektor wie etwa einer Kamera (412), der dazu angeordnet ist, Bilder von Licht aufzuzeichnen, das durch eine Probe in dem Probenhalter übertragen wird,
   - einem ersten Strahlteiler (404, 511) zum Teilen des Basislichtstrahls von der kohärenten Lichtquelle in mindestens einen ersten geteilten Strahl und einen zweiten geteilten Strahl, wobei sich der erste Strahlteiler (404, 511) zum Teilen des Basislichtstrahls in einen ersten geteilten Strahl und einen zweiten geteilten Strahl stromaufwärts oder stromabwärts des Probenhalters befindet, und
   - einem Lichtstrahlführungssystem zum Führen des Basislichtstrahls oder des ersten geteilten Lichtstrahls durch die Probe, das ferner dazu angeordnet ist, den ersten und den zweiten geteilten Strahl so zu führen, dass sie sich an einem Wiedervereinigungspunkt wiedervereinigen, bevor der erste und der zweite Strahl auf den Detektor gerichtet werden,

wobei
das Verfahren ferner die Verwendung einer lichtreduzierenden Anordnung umfasst, die sich stromabwärts des Probenhalters und stromaufwärts des Wiedervereinigungspunkts mindestens des ersten und zweiten geteilten Strahls befindet, wobei die lichtreduzierende Anordnung Folgendes umfasst:

   - mindestens eine erste Linse (102) zum Kollimieren des von einem Partikel (106) gestreuten Lichts, das in der Probe umfasst ist, und Fokussieren des ungestreuten Lichts, das durch die Probe hindurchtritt, an einem ersten Brennpunkt und
   - ein teilweise lichtdurchlässiges Raumfilter (108, 206, 413, 513), das an oder in der Nähe der Brennebene (103, 203) der ersten Linse angeordnet ist, um die Intensität des fokussierten ungestreuten Lichts entweder von dem Basislichtstrahl oder dem ersten geteilten Lichtstrahl, das durch die Probe durchtritt, die sich in der ersten Bildebene (101, 201, 307, 407, 507) befindet, so zu reduzieren, dass der Großteil, aber nicht die Gesamtheit, des durch die Probe hindurchtretenden ungestreuten Lichts im Lichtstrahl abgefiltert wird und der Großteil des durch das Partikel (106) gestreuten Lichts über das Lichtführungssystem zum Detektor geführt wird und optische

**EP 4 260 143 B1**

Eigenschaften des von den Submikrometerpartikeln in der Probe stammenden gestreuten Lichts durch Aufzeichnen eines oder mehrerer Bilder und Analysieren des einen oder der mehreren Bilder detektiert werden.

9. Verfahren nach Anspruch 8, **dadurch gekennzeichnet, dass** das absolute optische Feld der Submikrometerpartikel in der Probe, ausgedrückt als komplexe Zahl, quantifiziert wird durch

   i. Bestimmen des optischen Feldes von Licht, das durch das Partikel hindurchgetreten ist, durch Bestimmen der Phasenverschiebung und der Amplitude aus der Analyse eines oder mehrerer aufgezeichneter Bilder
   ii. Normieren des optischen Feldes des beleuchtenden Hintergrundlichts und Subtrahieren desselben von dem optischen Feld des Lichts, das durch das Partikel hindurchgetreten ist, um das optische Feld des Partikels zu isolieren, z. B. durch Aufzeichnen und Analysieren einer Videosequenz bekannter Kalibrierpartikel sowohl mit als auch ohne das Raumfilter
   iii. Teilen oder Multiplizieren des optischen Feldes des Partikels mit einem vorbestimmten Kompensationsfaktor, um die Wirkung des Raumfilters zu kompensieren, z. B. durch Bestimmen eines Skalierungsfaktors r für die Amplitude durch Teilen der Amplitude mit Raumfilter durch die Amplitude ohne Raumfilter, und

   Bestimmen eines Skalierungsterms θ für Phase durch Subtrahieren der Phase mit Raumfilter von der Phase ohne Raumfilter.

10. Verfahren nach einem der Ansprüche 8-9, **dadurch gekennzeichnet, dass** die relative Intensität des ersten geteilten Strahls, auch als Objektstrahl bezeichnet, und des zweiten geteilten Strahls, auch als Referenzstrahl bezeichnet, angepasst wird, um Interferenz des Objekts und des Referenzstrahls zu optimieren.

11. Verfahren nach einem der Ansprüche 8-10, **dadurch gekennzeichnet, dass** der hydrodynamische Durchmesser oder die Größe des Partikels durch Analyse seiner Brownschen Bewegung geschätzt wird und der hydrodynamische Durchmesser in Kombination mit einer optischen Eigenschaft wie etwa Phasenverschiebung verwendet wird, um einen Brechungsindex (RI) des detektierten Partikels zu schätzen.

12. Verfahren nach einem der Ansprüche 9 oder 10, **dadurch gekennzeichnet, dass** die Größe des Partikels aus einem absoluten optischen Signal des Partikels in Bezug auf die Mie-Theorie geschätzt wird.

13. Verfahren nach einem der Ansprüche 8-12, **dadurch gekennzeichnet, dass** unterschiedliche Partikelpopulationen in derselben Probe durch ihre jeweilige Beziehung zwischen zwei unabhängigen Variablen identifiziert werden, wobei eine Variable der hydrodynamische Durchmesser oder Diffusivität oder eine davon abgeleitete Variable ist und die andere Variable eine optische Eigenschaft wie etwa die integrierte Phasenverschiebung ist.

14. Verfahren nach einem der Ansprüche 8-12, **dadurch gekennzeichnet, dass** unterschiedliche Partikelpopulationen in derselben Probe durch ihre jeweilige Beziehung zwischen zwei unabhängigen optischen Variablen wie etwa der integrierten Phasenverschiebung und dem optischen Streuquerschnitt oder verwandten Variablen identifiziert werden.

15. Verfahren nach einem der Ansprüche 8-14, **dadurch gekennzeichnet, dass** die Wirkung des Filters (108, 206, 413, 513) quantifiziert wird, indem eine Probe von Partikeln sowohl mit als auch ohne das Filter abgebildet und das optische Signal aus den beiden Messungen numerisch verglichen wird.


**Revendications**

1. Microscope holographique numérique, DHM, comprenant

   - une source de lumière cohérente (401, 501) pour créer un faisceau de lumière de base pour éclairer un échantillon dans un premier plan d'image (101, 201, 407, 507),
   - un porte-échantillon pour maintenir un échantillon dans le premier plan d'image (101, 201, 407, 507) à éclairer,
   - un détecteur, par exemple une caméra (412, 512), agencé pour enregistrer des images de la lumière transmise à travers un échantillon dans le porte-échantillon,
   - un premier séparateur de faisceau (404, 511) pour diviser le faisceau de lumière de base provenant de la source de lumière cohérente (401, 501) en au moins un premier faisceau divisé et un second faisceau divisé, ledit premier séparateur de faisceau (404, 511) pour diviser le faisceau de lumière de base en différentes portions étant situé en amont ou en aval du porte-échantillon, et
- un système de guidage de faisceau de lumière pour guider ledit faisceau de lumière de base ou ledit premier faisceau de lumière divisé à travers l'échantillon et agencé en outre pour guider lesdits premier et second faisceaux divisés pour se réunir en un point de réunion avant que les premier et second faisceaux ne soient dirigés vers le détecteur,

dans lequel
ledit microscope holographique numérique comprend en outre un dispositif de réduction de la lumière pour réduire l'intensité de la lumière dans le premier faisceau divisé, ledit dispositif de réduction de la lumière comprenant

- au moins une première lentille (102) pour collimater la lumière dans le premier faisceau divisé diffusée par une particule (106) contenue dans l'échantillon et focaliser la lumière non diffusée traversant l'échantillon dans un plan focal (103, 203), et
- un filtre spatial partiellement transparent à la lumière (108, 206, 413, 513) agencé au niveau ou à proximité du plan focal (103, 203) de ladite première lentille (102) afin de réduire l'intensité de la lumière non diffusée focalisée traversant l'échantillon situé dans le premier plan d'image (101, 201, 307, 407, 507) de sorte que la majorité, mais pas la totalité, de la lumière non diffusée traversant l'échantillon est filtrée et que la majorité de la lumière diffusée par une particule (106) dans l'échantillon est guidée par l'intermédiaire d'un système de guidage de la lumière pour se réunir avec ledit second faisceau divisé.

2. Microscope holographique numérique selon la revendication 1, **caractérisé en ce que** le filtre (108, 206, 413) est conçu pour avoir une forme et une taille adaptées à son emplacement par rapport au plan focal (103, 203), de sorte que le filtre (108, 206, 413, 513) filtre au moins 50 % de la lumière focalisée provenant de la première lentille.

3. Microscope holographique numérique selon l'une quelconque des revendications précédentes, **caractérisé en ce que** le filtre (108, 206, 413, 513) est conçu pour réduire l'intensité de la lumière totale dans le faisceau objet d'au moins 50 %, de préférence d'au moins 80 %, et le plus préférablement d'au moins 95 %.

4. Microscope holographique numérique selon l'une quelconque des revendications précédentes, **caractérisé en ce que** ledit dispositif de réduction de la lumière comprend une seconde lentille et ledit filtre (108, 206, 413, 513) étant situé entre ladite première lentille (102) et ladite seconde lentille (104, 207).

5. Microscope holographique numérique selon la revendication 4, **caractérisé en ce que** ladite première lentille (102) et ladite seconde lentille (104, 207) sont agencées l'une par rapport à l'autre de telle sorte que leurs plans focaux respectifs (103, 203) coïncident dans l'espace entre les lentilles et que le filtre (108, 206, 413, 513) est situé à proximité immédiate des points focaux coïncidents.

6. Microscope holographique numérique selon l'une quelconque des revendications précédentes, **caractérisé en ce que** les premier et second faisceaux sont réunis de manière à former une configuration hors axe lorsqu'ils sont détectés par le détecteur.

7. Microscope holographique numérique selon l'une quelconque des revendications précédentes **caractérisé en ce que** ledit premier séparateur de faisceau (404) pour diviser le faisceau de lumière de base en les au moins premier faisceau divisé et second faisceau divisé est situé en amont dudit porte-échantillon et ledit premier faisceau de lumière est utilisé comme faisceau objet et est guidé vers l'échantillon et le porte-échantillon tandis que ledit second faisceau est utilisé comme faisceau de référence et est guidé pour contourner l'échantillon.

8. Procédé de caractérisation de particules submicroniques et de nanoparticules par microscopie holographique numérique, ledit procédé comprenant l'utilisation

- d'une source de lumière cohérente (401) pour créer un faisceau de lumière de base destiné à éclairer un échantillon,
- d'un porte-échantillon situé dans un premier plan d'image pour maintenir un échantillon à éclairer,
- d'un détecteur tel qu'une caméra (412) agencé pour enregistrer des images de la lumière transmise à travers un échantillon dans le porte-échantillon,
- d'un premier séparateur de faisceau (404, 511) pour diviser le faisceau de lumière de base provenant de la source de lumière cohérente en au moins un premier faisceau divisé et un second faisceau divisé, ledit premier séparateur de faisceau (404, 511) pour diviser le faisceau de lumière de base en un premier faisceau divisé et un second faisceau divisé étant situé en amont ou en aval du porte-échantillon, et

- d'un système de guidage de faisceau de lumière pour guider ledit faisceau de lumière de base ou ledit premier faisceau de lumière divisé à travers l'échantillon et agencé en outre pour guider lesdits premier et second faisceaux divisés pour se réunir en un point de réunion avant que les premier et second faisceaux ne soient dirigés vers le détecteur,

dans lequel
ledit procédé implique en outre l'utilisation d'un dispositif de réduction de la lumière situé en aval du porte-échantillon et en amont du point de réunion des au moins premier et second faisceaux divisés, ledit dispositif de réduction de la lumière comprenant

- au moins une première lentille (102) pour collimater la lumière diffusée par une particule (106) contenue dans l'échantillon et focaliser la lumière non diffusée traversant l'échantillon en un premier point focal, et
- un filtre spatial partiellement transparent à la lumière (108, 206, 413, 513) agencé au niveau ou à proximité du plan focal (103, 203) de ladite première lentille afin de réduire l'intensité de la lumière non diffusée focalisée provenant soit du faisceau de lumière de base, soit du premier faisceau de lumière divisé traversant l'échantillon situé dans le premier plan d'image (101), 201, 307, 407, 507) de telle sorte que la majorité, mais pas la totalité, de la lumière non diffusée dans le faisceau de lumière traversant l'échantillon est filtrée et que la majorité de la lumière diffusée par la particule (106) est guidée par le système de guidage de la lumière vers le détecteur et que les propriétés optiques de la lumière diffusée provenant des particules submicroniques dans l'échantillon sont détectées en enregistrant une ou plusieurs images et en analysant la ou les images.

9. Procédé selon la revendication 8, **caractérisé en ce que** le champ optique absolu des particules submicroniques dans l'échantillon, exprimé en nombre complexe, est quantifié par

i. la détermination du champ optique de la lumière ayant traversé la particule, en déterminant le déphasage et l'amplitude à partir de l'analyse d'une ou plusieurs images enregistrées
ii. la normalisation du champ optique de la lumière de fond éclairante et en le soustrayant du champ optique de la lumière ayant traversé la particule pour isoler le champ optique de la particule, par exemple en enregistrant et en analysant une séquence vidéo de particules d'étalonnage connues, avec et sans le filtre spatial
iii. la division ou la multiplication du champ optique de la particule par un facteur de compensation prédéterminé, afin de compenser l'effet du filtre spatial, par exemple en déterminant un facteur d'échelle r pour l'amplitude en divisant l'amplitude avec filtre spatial par l'amplitude sans filtre spatial, et

déterminer un terme d'échelle θ pour la phase en soustrayant la phase avec filtre spatial de la phase sans filtre spatial.

10. Procédé selon l'une quelconque des revendications 8 et 9, **caractérisé en ce que** l'intensité relative du premier faisceau divisé, également appelé faisceau objet, et du second faisceau divisé, également appelé faisceau de référence, est ajustée afin d'optimiser l'interférence du faisceau objet et du faisceau de référence.

11. Procédé selon l'une quelconque des revendications 8 à 10, **caractérisé en ce que** le diamètre hydrodynamique ou la taille de la particule est estimé par l'analyse de son mouvement brownien et le diamètre hydrodynamique est utilisé en combinaison avec une propriété optique telle que le déphasage pour estimer un indice de réfraction (IR) de la particule détectée.

12. Procédé selon l'une quelconque des revendications 9 ou 10, **caractérisé en ce que** la taille de la particule est estimée à partir d'un signal optique absolu de la particule en relation avec la théorie de Mie.

13. Procédé selon l'une quelconque des revendications 8 à 12, **caractérisé en ce que** différentes populations de particules dans le même échantillon sont identifiées grâce à leur relation respective entre deux variables indépendantes où une variable est le diamètre hydrodynamique ou la diffusivité ou toute variable dérivée, et l'autre variable est une propriété optique telle que le déphasage intégré.

14. Procédé selon l'une quelconque des revendications 8 à 12, **caractérisé en ce que** différentes populations de particules dans le même échantillon sont identifiées grâce à leur relation respective entre deux variables optiques indépendantes telles que le déphasage intégré et la section transversale de diffusion optique, ou des variables apparentées.

15. Procédé selon l'une quelconque des revendications 8 à 14, **caractérisé en ce que** l'effet du filtre (108, 206, 413, 513) est quantifié par imagerie d'un échantillon de particules à la fois avec et sans le filtre et en comparant numériquement le signal optique provenant des deux mesures.

FIG. 1A

105       104       103       102       101

f       f       f       f

FIG. 1B

105       104       103       102       101

106

f       f       f       f

FIG. 1C

105       104       103       102       101

107       108

f       f       f       f

FIG. 1D

105       104       103       102       101

107       108

109

FIG. 2A

201

202

203

206

205

207

FIG. 2B

201

202

203

208

207

FIG. 3

301

302

303

304

305

306

307

308

309

310

311

312

FIG. 4

FIG. 5

FIG. 6A

FIG. 6B

FIG. 6C

FIG. 7A

FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2552195 A

**Non-patent literature cited in the description**

- **MIDTVEDT et al.** *Analytical Chemistry*, 2020, vol. 92, 1908-1915
- **MIDTVEDT et al.** *arXiv 2006.11154 and ACS Nano*, 2020, vol. 15 (2), 2240-2250
- **DOMINGUEZ CABALLERO J A**. *Digital holographic imaging of aquatic species, Reconstruction by the Fresnel Approximation*, 01 February 2006, 45-52
- **GOTO et al.** *Opt. Lett.*, 2015, vol. 40, 3344
- **CHENG et al.** *Nanoscale*, 2019, vol. 11, 568
- **MIDTVEDT et al.** *Analytical Chemistry*, 2020